# EUROPEAN PATENT SPECIFICATION

(11) **EP 4 251 908 B1**
(45) Date of publication and mention of the grant of the patent: **19.08.2026**
(21) Application number: 21830855.9
(22) Date of filing: 30.11.2021
(51) Int. Cl.: F16K 5/02, F16K 27/06, F16K 31/50, F16K 27/12, F16K 5/16

(54) **TORQUE REDUCTION VALVE HAVING SEPARATE STATIC SEAL AND DYNAMIC SEAL**
DREHMOMENTVERRINGERUNGSVENTIL MIT SEPARATER STATISCHER DICHTUNG UND DYNAMISCHER DICHTUNG
SOUPAPE DE RÉDUCTION DE COUPLE AYANT UN JOINT STATIQUE SÉPARÉ ET UN JOINT DYNAMIQUE

(30) Priority: 30.11.2020 US 202063119330 P; 29.11.2021 US 202117536549
(43) Date of publication of application: 04.10.2023
(73) Proprietor: Xomox PFT Corp., Cincinnati, OH 45242 (US)
(72) Inventor: FUOC, Alain, Cincinnati, OH 45242 (US); ALMOND, Chris, Cincinnati, OH 45242 (US); LYLE, Peter, Jeffrey, Cincinnati, OH 45242 (US); KULKARNI, Sudhir, K., Cincinnati, OH 45242 (US)
(74) Representative: J A Kemp LLP
(86) International application number: PCT/US2021/061056
(87) International publication number: WO 2022/115724

(56) References cited:
- EP-A2- 0 100 629
- GB-A- 566 798
- JP-U- H04 134 967
- US-A- 3 536 295
- US-A- 4 410 003
- US-A- 4 494 730

## Description

### PRIORITY

This application claims the benefit of U.S. Pat. App. No. 63/119,330, entitled "Torque Reduction Valve Having Separate Static Seal and Dynamic Seal," filed November 30, 2020.

### BACKGROUND

Some valves include a valve assembly and a main valve body for coupling with the valve assembly. The valve body may include a housing and at least one end connector element extending from the housing. The end connector element is used to secure a pipeline or similar feature to the valve via welding or fasteners. With regard to plug style valves, the valve assembly may include a mounting plate configured to be fixedly coupled to the housing and a plug rotatably extending from the mounting plate into an internal chamber of the housing. The plug includes a plug body configured to inhibit the flow of fluid through the plug when the plug is in a closed state and a plug flow passage extending through the plug body configured to facilitate the flow of fluid through the plug when the plug is in an open state.

Some plug style valves further include a sleeve fixedly secured within the internal chamber of the housing and having an interior cavity for rotatably receiving the plug as well as a pair of apertures for aligning with the plug flow passage when the plug is in the open state. The sleeve may be configured to provide a fluid-tight seal between the plug body and the housing and may be constructed of a polymeric material having a relatively high chemical resistance and a relatively low coefficient of friction, such as Polytetrafluoroethylene (PTFE). Such valves may be referred to as sleeved plug valves.

During assembly of conventional sleeved plug valves, the plug and sleeve are typically both compressed downwardly into the internal chamber of the housing. As a result, relatively high compressive forces may be applied to both the internal and external surfaces of the sleeve. For example, such high compressive forces may be applied between the external surface of the sleeve and the internal surface of the housing, and between the internal surface of the sleeve and the external surface of the plug. These high compressive forces may resist the rotation of the plug between the open and closed states, thereby requiring a relatively high input torque to be applied to the plug in order to achieve such rotation. Thus, it may be desirable to reduce at least some of these compressive forces while maintaining a fluid-tight seal between the plug body and the housing to reduce the amount of input torque needed to rotate the plug. EP 0 100 629 A2 discloses a rotary plug valve. US 3 536 295 A, GB 566 798 A and JP H04 134967 U disclose background art to the invention.

### BRIEF DESCRIPTION OF THE DRAWINGS

While the specification concludes with claims which particularly point out and distinctly claim the invention, it is believed the present invention will be better understood from the following description of certain examples taken in conjunction with the accompanying drawings, in which like reference numerals identify the same elements and in which:
FIG. 1 depicts a perspective view of an exemplary sleeved plug valve;
FIG. 2 depicts an exploded perspective view of the sleeved plug valve of FIG. 1 with a valve body of the sleeved plug valve spaced apart from a valve assembly of the sleeved plug valve, the valve assembly having an exemplary plug spaced apart from an exemplary cartridge with an exemplary sleeve affixed thereto;
FIG. 3 depicts an exploded perspective view of the valve body of FIG. 2 with an exemplary pair of end connector elements spaced apart from an exemplary housing;
FIG. 4 depicts a partial exploded perspective view of the valve assembly of FIG. 2 with the sleeve spaced apart from a lower hub of the cartridge;
FIG. 5 depicts a cross-sectional view of the sleeve of FIG. 2;
FIG. 6 depicts a cross-sectional view of the plug of FIG. 2;
FIG. 7A depicts a cross-sectional view of the sleeved plug valve of FIG. 1 taken along section line 7A-7A in FIG. 1, with the plug in an open state;
FIG. 7B depicts a cross-sectional view similar to FIG. 7A, with the plug rotated to a closed state;
FIG. 7C depicts a cross-sectional view similar to FIG. 7A, with the plug translating upwardly relative to the cartridge and sleeve;
FIG. 8 depicts a cross-sectional view of another exemplary sleeved plug valve; and
FIG. 9 depicts a perspective view of a cartridge of the sleeved plug valve of FIG. 10.

The drawings are not intended to be limiting in any way, and it is contemplated that various embodiments of the invention may be carried out in a variety of other ways, including those not necessarily depicted in the drawings. The accompanying drawings incorporated in and forming a part of the specification illustrate several aspects of the present invention, and together with the description serve to explain the principles of the invention; it being understood, however, that this invention is not limited to the precise arrangements shown, but rather by the claims.

### DETAILED DESCRIPTION

The following description of certain examples of the invention should not be used to limit the scope of the present invention, which is defined by the claims. Other examples, features, aspects, embodiments, and advantages of the invention will become apparent to those skilled in the art from the following description, which is by way of illustration, one of the best modes contemplated for carrying out the invention. As will be realized, the invention is capable of other different and obvious aspects, all without departing from the invention which is defined by the claims. Accordingly, the drawings and descriptions should be regarded as illustrative in nature and not restrictive.

It will be appreciated that any one or more of the teachings, expressions, versions, examples, etc. described herein may be combined with any one or more of the other teachings, expressions, versions, examples, etc. that are described herein. The following-described teachings, expressions, versions, examples, etc. should therefore not be viewed in isolation relative to each other. Various suitable ways in which the teachings herein may be combined will be readily apparent to those of ordinary skill in the art in view of the teachings herein. Such modifications and variations are intended to be included within the scope of the claims.

### I. First Exemplary Sleeved Plug Valve

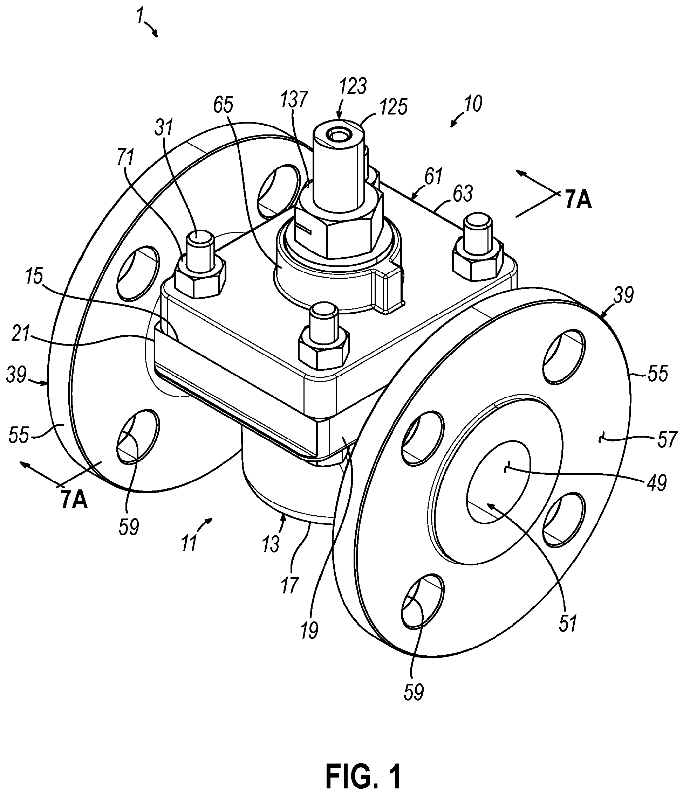

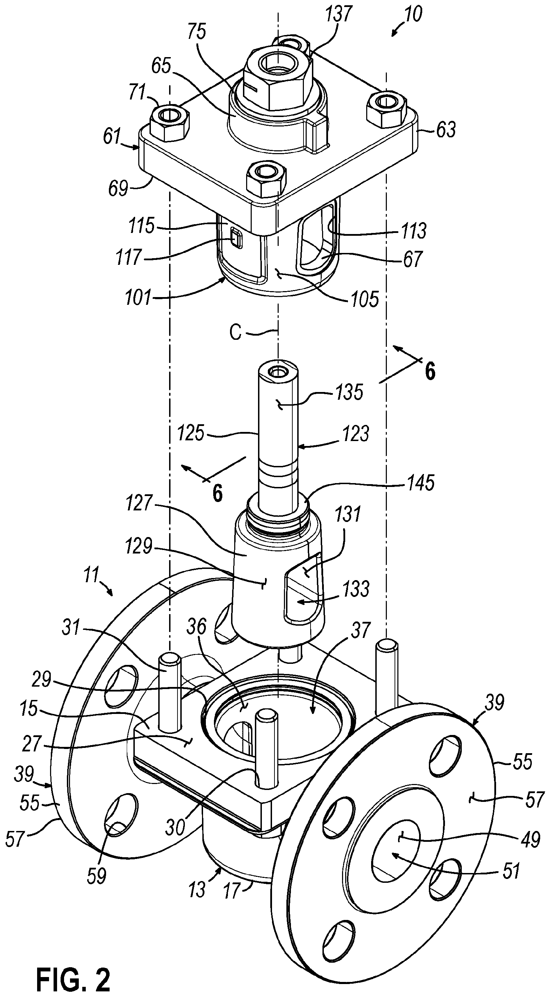

A sleeved plug valve is shown in FIGS. 1 and 2, hereinafter referred to as valve (1). In the example shown, valve (1) includes a sleeved plug style valve assembly (10) and a main valve body (11) configured to receive valve assembly (10). As will be discussed in greater detail below, valve (1) may provide various benefits relative to prior art valves.

### A. Exemplary Valve Body

Valve body (11) of valve (1) may be modular with bimetallic option. As used herein, the phrase "bimetallic option" denotes how elements or features of modular valve body (11) may be comprised of similar materials or optionally may be comprised of different materials. Modular valve body (11) may also be referred to as a hybrid valve body given the two different materials used in its construction in some versions. In some versions, modular valve body (11) may be configured in accordance with at least some of the teachings of U.S. Pat. App. No. 62/937,869, entitled "Modular Valve Body with Bimetallic Option," filed November 20, 2019.

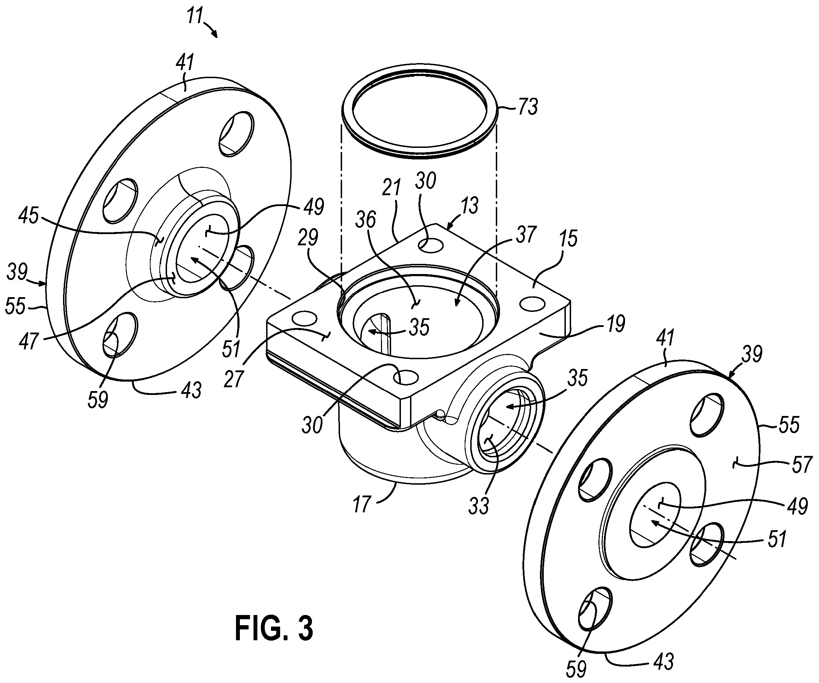

As best shown in FIGS. 2 and 3, modular valve body (11) includes a housing (13) which includes a top (15) and a bottom (17), as well as a first side (19) and a spaced apart second side (21). Top (15) includes a top surface (27). A recess (29) is defined in top surface (27) and sized and positioned to selectively receive a portion of valve assembly (10), as discussed in greater detail below. Top (15) defines a plurality of top bores (30) extending from top surface (27) through top (15). Top bores (30) are each sized and positioned to receive a respective bolt or similar connector or fastener (31) therethrough.

Housing (13) also includes a pair of generally cylindrical, opposed internal housing surfaces (33) (one shown). Internal housing surfaces (33) define respective housing flow passages (35) to facilitate the flow of fluid through housing (13). Housing (13) also includes a generally cylindrical, central internal housing surface (36) which defines an internal chamber (37) sized to receive a portion of valve assembly (10) therein for selectively restricting the flow of fluid through housing (13), as described in greater detail below. Internal chamber (37) may define a central axis (C) of valve (1) and housing flow passages (35) may extend transversely relative to internal chamber (37), and thus relative to central axis (C).

Modular valve body (11) also includes at least one end connector element (39). When modular valve body (11) is fully assembled, end connector element (39) extends from housing (13). End connector element (39) is generally cylindrical and extends from a top (41) to a bottom (43) and includes a peripheral surface (45) and an external surface (47). End connector element (39) includes a generally cylindrical, internal end surface (49). Internal end surface (49) defines an end flow passage (51) to facilitate the flow of fluid through end connector element (39). When joined with housing (13), end flow passage (51) is in fluid communication with housing flow passage (35). End connector element (39) is configured to be joined with a pipeline to secure the pipeline to modular valve body (11). End connector element (39) further includes a connector flange (55) extending outwardly away from peripheral surface (45). Connector flange (55) includes an outward surface (57) for abutting with a similar flange on a pipeline (not shown). Connector flange (55) defines a plurality of connector bores (59) extending from outward surface (57) through connector flange (55). Connector bores (59) are each sized and positioned to receive a respective bolt or similar connector or fastener (not shown) therethrough. The connector may be passed through a similar connector flange on the pipeline to connect the pipeline to end connector element (39).

As shown, housing (13) and end connector element (39) are joined together to form modular valve body (11). In some versions of modular valve body (11), end connector element (39) is joined to housing (13) by inertial friction welding end connector element (39) onto housing (13), as described in U.S. Pat. App. No. 62/937,869. While valve body (11) has been described as being modular with housing (13) and end connector elements (39) initially formed separately from each other as individual pieces and subsequently joined to each other, valve body (11) may alternatively be unitary, with housing (13) and end connector elements (39) integrally formed (e.g., cast) together as a single piece.

### B. Exemplary Valve Assembly

With continuing reference primarily to FIG. 2, valve assembly (10) of valve (1) includes a cartridge (61) having a generally rectangular mounting plate (63) configured to be removably coupled to top (15) of housing (3), a generally cylindrical central upper hub (65) extending upwardly from mounting plate (63), and a generally tubular central lower hub (67) extending downwardly from mounting plate (63) and configured to be received within internal chamber (37) of housing (3) when mounting plate (63) is fixedly coupled to top (15). In this regard, mounting plate (63) includes a lower surface (69) for abutting or otherwise confronting top surface (27) of top (15). Mounting plate (63) defines a plurality of mounting plate bores (not shown) extending from lower surface (69) through mounting plate (63), each of which are each sized and positioned to receive a respective bolt or similar connector or fastener (31) therethrough to thereby fixedly couple mounting plate (63) to top (15) (e.g., via corresponding nuts (71)) while permitting selective removal of mounting plate (63) from top (15). In the example shown, valve assembly (10) also includes an annular gasket (73) (FIG. 3) having a generally undulated cross section and positioned at or below lower surface (69) such that gasket (73) is configured to be received within and sealingly engage recess (77) of housing (13) to provide a fluid-tight seal therebetween.

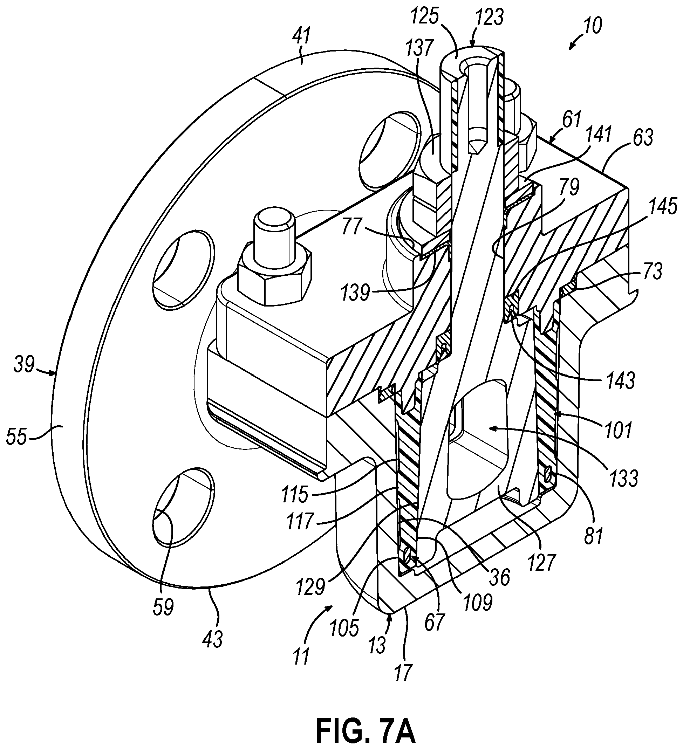

Upper hub (65) includes a generally annular upper surface (75) in which a recess (77) (FIG. 7A) is defined, the purpose of which is discussed below. Mounting plate (63) and upper hub (65) collectively define a central bore (79) (FIG. 7A) extending from lower surface (69) through mounting plate (63) and upper hub (65) to recess (77), and configured to be axially aligned with internal chamber (37) of housing (3). Central bore (79) may be single-stage such that central bore (79) has a constant diameter, or may be multi-stage such that central bore (79) has a plurality of diameters.

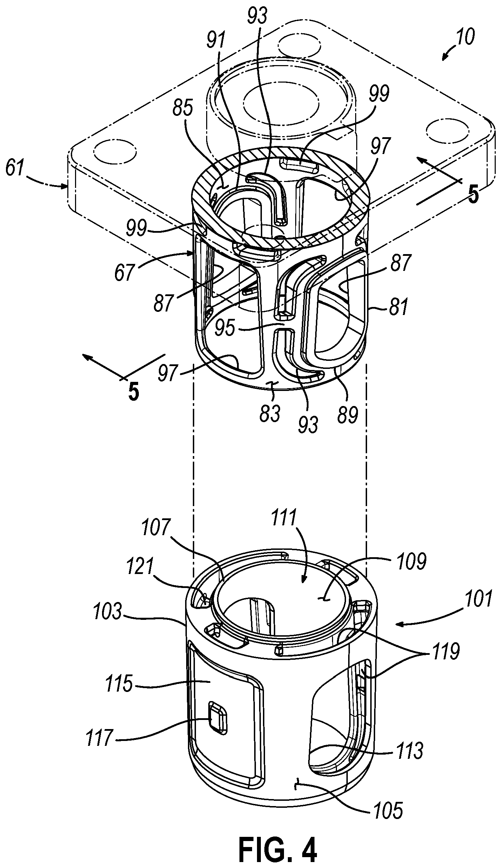

As best shown in FIG. 4, lower hub (67) includes a support frame (81) having a generally cylindrical external lower hub surface (83) and a generally frustoconical internal lower hub surface (85) tapering radially outwardly in a downward direction (e.g., at an angle (α) relative to central axis (C) as described below) such that relatively lower portions of lower hub (67) have a relatively greater internal cross dimension than relatively upper portions of lower hub (67). Lower hub (67) defines a pair of opposed lower hub apertures (87) extending from external lower hub surface (83) to internal lower hub surface (85) and configured to be aligned with respective housing flow passages (35) of housing (13). As shown, lower hub (67) includes a pair of opposed external rims (89) extending outwardly from external lower hub surface (83) about the peripheries of respective lower hub apertures (87) and a pair of opposed internal rims (91) extending inwardly from internal lower hub surface (85) about the peripheries of respective lower hub apertures (87).

Support frame (81) defines a plurality of curved slots (93) extending from external lower hub surface (83) to internal lower hub surface (85) partially about the peripheries of respective lower hub apertures (87). In the example shown, four curved slots (93) are arranged about each lower hub aperture (87), with each adjacent pair of curved slots (93) separated from each other by a support rib (95) of support frame (81). Support frame (81) also defines a pair of opposed openings (97) extending from external lower hub surface (83) to internal lower hub surface (85) between lower hub apertures (87) and their corresponding curved slots (93). Support frame (81) further defines a plurality of straight slots (99) extending from external lower hub surface (83) to internal lower hub surface (85) generally above respective openings (97). In the example shown, two straight slots (99) are arranged above each opening (97). As discussed in greater detail below, curved slots (93), openings (97), and straight slots (99) may each be configured to assist in securing another material to support frame.

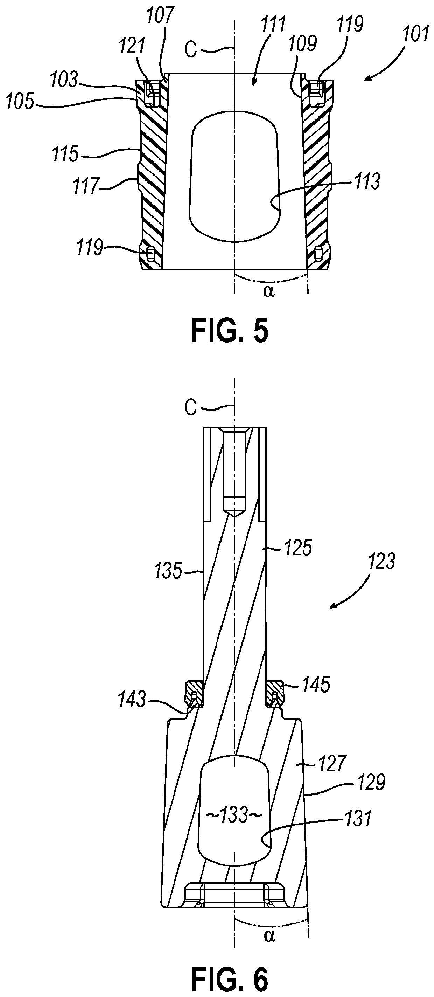

In this regard, valve assembly (10) also includes a sleeve (101) fixedly coupled to lower hub (67) of cartridge (61). As best shown in FIGS. 4 and 5, sleeve (101) includes an outer sleeve portion (103) configured to overlie external lower hub surface (83) and having a generally cylindrical external sleeve surface (105) for frictionally and/or sealingly engaging central internal housing surface (36) to inhibit relative movement therebetween and/or to provide a fluid-tight seal therebetween, and an inner sleeve portion (107) configured to overlie internal lower hub surface (85) and having a generally frustoconical internal sleeve surface (109) tapering radially outwardly in a downward direction at angle (α) relative to central axis (C) such that relatively lower portions of sleeve (101) have a relatively greater internal cross dimension than relatively upper portions of sleeve (101). Internal sleeve surface (109) defines an interior cavity (111) configured to communicate with central bore (79). Sleeve (101) defines a pair of opposed sleeve apertures (113) extending from external sleeve surface (105) to internal sleeve surface (109) in alignment with lower hub apertures (87). In this regard, sleeve apertures (113) may substantially surround respective rims (89, 91) of lower hub (67). A pair of opposed recesses (115) are defined in external sleeve surface (105) between sleeve apertures (113), and a pair of opposed protrusions (117) extend outwardly from respective recesses (115) for frictionally engaging central internal housing surface (36) to inhibit relative movement therebetween. For example, protrusions (117) may extend radially outwardly away from central axis (C) beyond external sleeve surface (105). In any event, outer and inner sleeve portions (103, 107) are spaced apart from each other by various channels (119) configured to receive respective portions of support frame (81) (e.g., support ribs (95)) and are coupled to each other by various connecting portions (121) configured to occupy respective slots (93, 99) and/or openings (97) of support frame (81) such that support frame (81) may be securely captured between inner and outer sleeve portions (103, 107). Thus, sleeve (101) may at least partially encapsulate lower hub (67) while providing access to lower hub apertures (87) via sleeve apertures (113).

In some versions, sleeve (101) may be constructed of a polymeric material having a relatively high chemical resistance and a relatively low coefficient of friction, such as PTFE or any other suitable polymer. In addition or alternatively, support frame (81) may be constructed of a metallic material to provide substantial structural stability to sleeve (101). In some versions, cartridge (61) may be unitary, with mounting plate (63), upper hub (65), and lower hub (67) (including support frame (81)) integrally formed (e.g., cast) together as a single piece.

Valve assembly (10) further includes a plug (123) rotatably coupled to mounting plate (63) and extending downwardly therefrom into interior cavity (111) of sleeve (101) such that plug (123) is configured to be received together with lower hub (67) and sleeve (101) within internal chamber (37) of housing (3). In this regard, plug (123) includes an input shaft (125) configured to be axially aligned with and rotatably received by central bore (79) of cartridge (61) and a plug body (127) extending downwardly from input shaft (125) such that plug body (127) may be rotatable within interior cavity (111) of sleeve (101) about central axis (C) relative to sleeve (101).

As best shown in FIG. 6, plug body (127) has a generally frustoconical external plug surface (129) tapering radially outwardly in a downward direction at angle (α) relative to central axis (C) such that relatively lower portions of plug body (127) have a relatively greater external cross dimension than relatively upper portions of plug body (127). In this regard, plug body (127) may have a varying external cross dimension corresponding to the varying internal cross dimension of sleeve (101). In this manner, external plug surface (129) is complementary to internal sleeve surface (109) such that external plug surface (129) is configured to mate with and sealingly engage internal sleeve surface (109) to provide a fluid-tight seal therebetween. Plug (123) includes an internal plug surface (131) extending transversely through plug body (127) between opposing portions of external plug surface (129). Internal plug surface (131) defines a plug flow passage (133) for selectively aligning with apertures (87, 113) of lower hub (67) and sleeve (101) to facilitate selective flow of fluid therethrough.

According to the invention, plug (123) is translatable relative to sleeve (101) along central axis (C) for adjusting a height of plug (123) relative to sleeve (101). In this regard, input shaft (125) of the present example has a generally cylindrical external shaft surface (135) which may have at least one helical shaft thread (not shown) defined at least partially therealong, and valve assembly (10) of the present example further includes a height adjustment nut (137) configured to threadably engage external shaft surface (135) of input shaft (125). Nut (137) may be configured to remain at a fixed height relative to cartridge (61) and housing (13) when mounting plate (63) is fixedly coupled to top (15). In the example shown, nut (137) is positioned above upper hub (65). More particularly, valve assembly (10) further includes an annular gasket (139) (FIG. 7A) having a generally L-shaped cross-section and received within recess (77) and an annular washer (141) sandwiched between nut (137) and gasket (139) such that nut (137) is vertically supported above upper hub (65) by gasket (139) and/or washer (141). Thus, nut (137) may be configured to remain at the illustrated height via gravity, at least when valve (1) is in an upright position. It will be appreciated that any other suitable means for maintaining nut (137) at a fixed height may be used. In this manner, rotation of nut (137) relative to input shaft (125) may cause input shaft (125) to translate relative to nut (137) along central axis (C), such that plug (123) may likewise translate relative to sleeve (101) along central axis (C).

Valve assembly (10) of the present example also includes an annular gasket (143) having a generally wedge-shaped cross section and positioned atop plug body (127) and a corresponding annular gasket (145) having a generally fork-shaped cross section and positioned within central bore (79) of cartridge (61) for sealingly engaging each other to provide a fluid-tight seal therebetween while accommodating relative movement therebetween due to height adjustments of plug (123) relative to sleeve (101) as well as rotation of plug (123) relative to sleeve (101).

### C. Exemplary Actuation of Valve

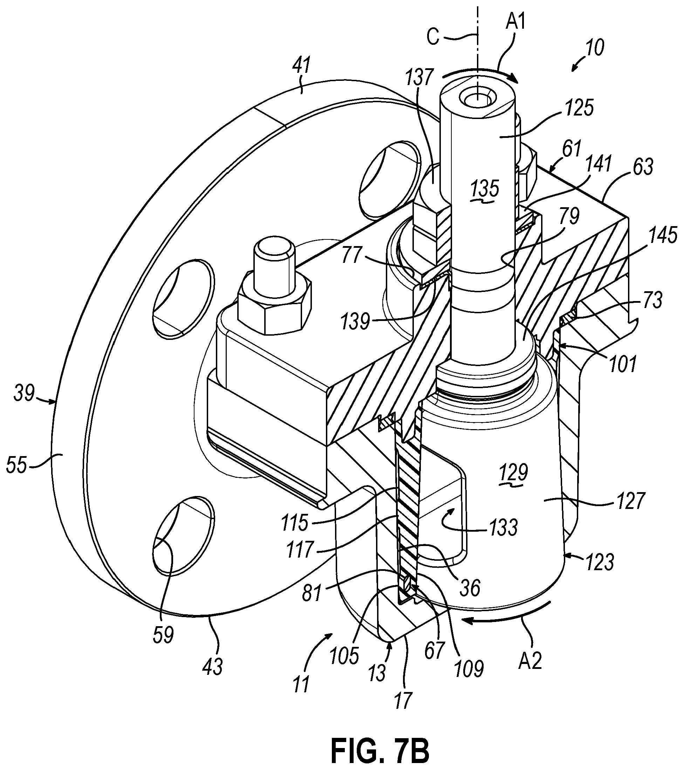

Referring now primarily to FIGS. 7A-7B, valve (1) may be actuatable via rotation of plug (123) about central axis (C) relative to sleeve (101) between an open state (FIG. 7A) and a closed state (FIG. 7B). Such rotation of plug (123) about central axis (C) relative to sleeve (101) for actuating valve (1) may be achieved via application of an input torque to input shaft (125) of plug (123), as indicated by first and second arrows (A1, A2) in FIG. 7B.

When plug (123) is in the open state shown in FIG. 7A, plug flow passage (133) is aligned with apertures (87, 113) of lower hub (67) and sleeve (101) such that housing flow passages (35) may fluidly communicate with each other via plug flow passage (133). Thus, fluid may flow from one of housing flow passages (35) to the other of housing flow passages (35) through plug flow passage (133) when plug (123) is in the open state. When plug (123) is in the closed state shown in FIG. 7B, plug flow passage (133) is substantially misaligned from (e.g., oriented perpendicularly relative to) apertures (87, 113) of lower hub (67) and sleeve (101) such that housing flow passages (35) may be fluidly isolated from each other via plug body (127). Thus, fluid may be blocked from flowing from one of housing flow passages (35) to the other of housing flow passages (35) by plug body (127) when plug (123) is in the closed state.

It will be appreciated that in some versions, plug (123) may be rotatable about central axis (C) relative to sleeve (101) to one or more intermediate states between the open and closed states (e.g., to one or more "partially open" or "partially closed" states), whereby plug flow passage (133) is only slightly misaligned from apertures (87, 113) of lower hub (67) and sleeve (101) such that housing flow passages (35) may fluidly communicate with each other via plug flow passage (133). In such cases, the slight misalignment of plug flow passage (133) from apertures (87, 113) of lower hub (67) and sleeve (101) may provide a fluid constriction for fluid flowing from one of housing flow passages (35) to the other of housing flow passages (35) through plug flow passage (133).

### D. Exemplary Torque Reduction Features

Since sleeve (101) is fixed against movement relative to housing (13), the fluid-tight seal between external sleeve surface (105) and internal housing surface (36) may be static. Conversely, since plug (123) is rotatable about central axis (C) relative to sleeve (101), the fluid-tight seal between external plug surface (129) and internal sleeve surface (109) may be dynamic. Due to the spacing apart of inner sleeve portion (107) from outer sleeve portion (103) by channels (119) and support frame (81), these static and dynamic seals may be separated from and substantially independent of each other, at least by comparison to conventional sleeved plug valve configurations. Such separation of the static and dynamic seals may enable a reduction in the amount of input torque needed to rotate plug (123) for actuating valve (1) by reducing the compressive force to external plug surface (129).

In this regard, during assembly of valve (1), plug (123) including plug body (127) may be initially positioned within interior cavity (111) of sleeve (101) at a first height relative to sleeve (101) such that external plug surface (129) is disengaged (e.g., spaced apart) from internal sleeve surface (109). Sleeve (101), together with lower hub (67), may then be compressed downwardly into internal chamber (37) of housing (13). As a result, relatively high compressive forces may be applied to external sleeve surface (105) but may not be transferred to internal sleeve surface (109). For example, such high compressive forces may only be applied between external sleeve surface (105) and internal housing surface (36). These high compressive forces may assist in resisting any rotation of sleeve (101) relative to housing (13). Moreover, due to the separation of the static and dynamic seals, these high compressive forces may provide limited or no resistance to the rotation of plug (123) about central axis (C) relative to sleeve (101).

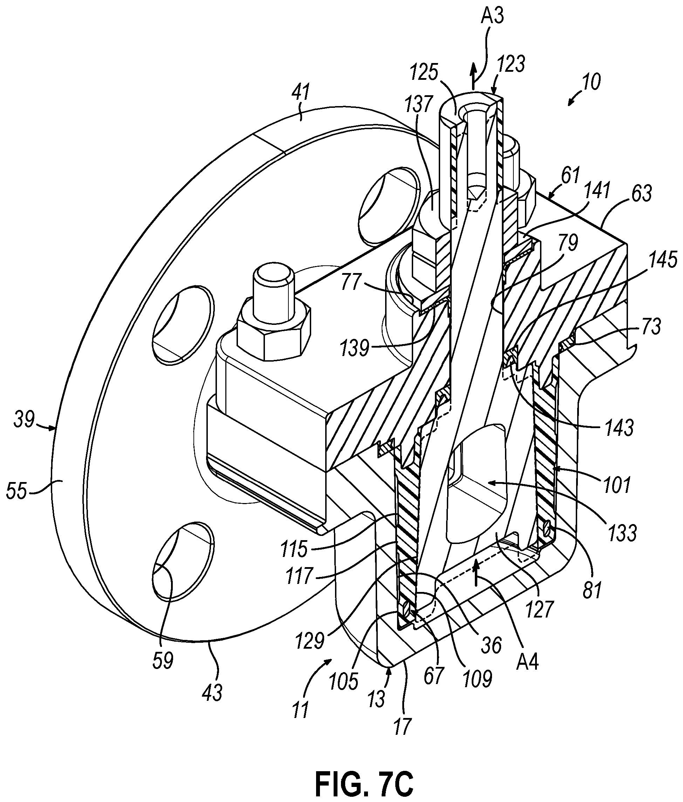

As shown in FIG. 7C, after sleeve (101) has been compressed downwardly into internal chamber (37) of housing (13) with external plug surface (129) disengaged from internal sleeve surface (109), plug (123) including plug body (127) may be raised upwardly to a second height relative to sleeve (101) as indicated by third and fourth arrows (A3, A4) to sealingly engage external plug surface (129) with internal sleeve surface (109) and thereby provide a fluid-tight seal therebetween, such as via rotation of nut (137) relative to input shaft (125). Such action may apply a more precisely controllable and substantially reduced compressive force to external plug surface (129) as compared to that applied to external sleeve surface (105) as a result of the downward compression of sleeve (101) into internal chamber (37). For example, such a substantially reduced compressive force may be applied between external plug surface (129) and internal sleeve surface (109), and may be controllably selected to provide sufficient sealing therebetween while limiting any resistance thereof to the rotation of plug (123) about central axis (C) relative to sleeve (101).

Thus, the amount of input torque needed to rotate plug (123) for actuating valve (1) may be substantially reduced as compared to that needed to actuate a similar valve having a conventional sleeved plug configuration. In some versions, the amount of input torque needed to rotate plug (123) for actuating valve (1) may be reduced by approximately 50% as compared to that needed to actuate a similar valve having a conventional sleeved plug configuration.

After prolonged operation of valve (1), the seal between external plug surface (129) and internal sleeve surface (109) may eventually start to leak, such as due to normal wear. In such cases, plug body (127) may again be raised further upwardly to a third height relative to sleeve (101) to sealingly re-engage external plug surface (129) with internal sleeve surface (109) and thereby re-establish a fluid-tight seal therebetween, such as via additional rotation of nut (137) relative to input shaft (125). In this manner, the adjustable height of plug (123) relative to sleeve (101) may allow the seal between external plug surface (129) and internal sleeve surface (109) to be maintained and/or repaired without requiring disassembly of valve (1) or removal of valve (1) from operation.

While the separation of static and dynamic seals from each other has been described above with respect to sleeved plug valve (1) for reducing the amount of input torque needed to actuate valve (1), it will be appreciated that various other types of valves may include separate static and dynamic seals for reducing the amount of input torque needed to actuate such valves. For example, such separation of static and dynamic seals may be incorporated into any valve having first and second static members with a static seal therebetween, and a dynamic member with a dynamic seal between the dynamic member and one or both of the static members, such as by spacing apart or otherwise separating or isolating the static and dynamic seals from each other.

### II. Second Exemplary Sleeved Plug Valve

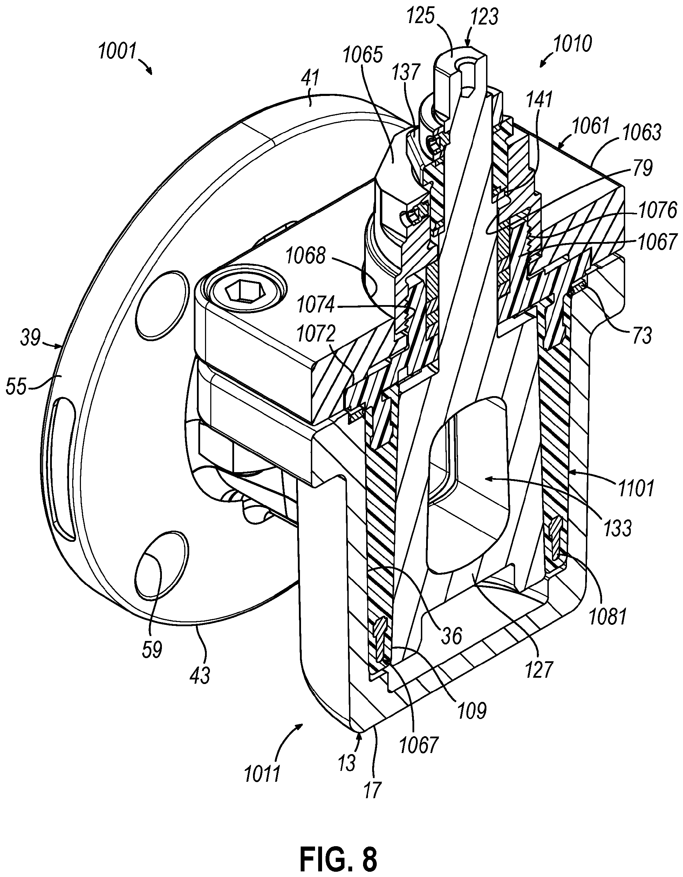

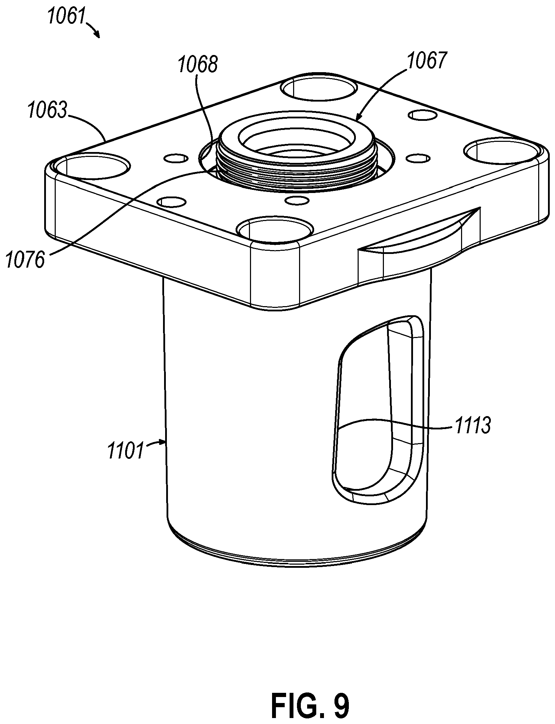

A second sleeved plug valve is shown in FIGS. 8-9, hereinafter referred to as valve (1001). In the example shown, valve (1001) includes a sleeved plug style valve assembly (1010) and a main valve body (1011) configured to receive valve assembly (1010). Valve (1001) is similar to valve (1) described above except as otherwise described below.

Main valve body (1011) of the present version is generally similar to valve body (11) described above. Valve assembly (1010) of the present version is generally similar to valve assembly (10) described above, but replaces cartridge (61) with a different cartridge (1061). As shown, rather than having mounting plate (63), upper hub (65), and lower hub (67) that are integrally formed together as a unitary piece like cartridge (61), cartridge (1061) of the present version is a multi-piece construction. More particularly, cartridge (1061) includes a mounting plate (1063), an upper hub (1065), and a lower hub (1067) separately formed from each other as distinct pieces. Mounting plate (1063), upper hub (1065), and lower hub (1067) are generally similar to mounting plate (63), upper hub (65), and lower hub (67) described above, respectively, except as described below.

In the present version, mounting plate (1063) defines a central opening (1068) configured to selectively receive portions of upper and lower hubs (1065, 1067). Lower hub (1067) includes an upwardly-facing ledge (1072) configured to abut a lower surface of mounting plate (1063) when lower hub (1067) is positioned within internal chamber (37) of housing (3) and mounting plate (1063) is coupled to top (15) for assisting with preventing lower hub (1067) from being inadvertently dislodged from internal chamber (37). Upper hub (1065) includes a threaded bore (1074) configured to threadably engage a portion of lower hub (1067) to thereby fixedly couple upper hub (1065) to lower hub (1067) while permitting selective removal of upper hub (1065) from lower hub (1067). To that end, lower hub (1067) includes a threaded exterior (1076) configured to threadably engage threaded bore (1074) of upper hub (1065).

As shown, rather than leaving portions of a support frame (1081) of lower hub (1067) exposed (like the inner peripheries of rims (89, 91) of lower hub (67)), a sleeve (1101) may substantially entirely encapsulate support frame (1081). For example, sleeve apertures (1113) may cover the inner peripheries of the rims of lower hub apertures (not shown) of lower hub (1067) to more fully encapsulate support frame (1081).

### III. Exemplary Combinations

The following examples relate to various non-exhaustive ways in which the teachings herein may be combined or applied. It should be understood that the following examples are not intended to restrict the coverage of any claims that may be presented at any time in this application or in subsequent filings of this application. No disclaimer is intended. The following examples are being provided for nothing more than merely illustrative purposes. It is contemplated that the various teachings herein may be arranged and applied in numerous other ways. It is also contemplated that some variations may omit certain features referred to in the below examples. Therefore, none of the aspects or features referred to below should be deemed critical unless otherwise explicitly indicated as such at a later date by the inventors or by a successor in interest to the inventors. If any claims are presented in this application or in subsequent filings related to this application that include additional features beyond those referred to below, those additional features shall not be presumed to have been added for any reason relating to patentability.

### IV. Miscellaneous

It should be understood that any of the examples described herein may include various other features in addition to or in lieu of those described above within the scope of the claims.

It should be understood that any one or more of the teachings, expressions, embodiments, examples, etc. described herein may be combined with any one or more of the other teachings, expressions, embodiments, examples, etc. that are described herein. The above-described teachings, expressions, embodiments, examples, etc. should therefore not be viewed in isolation relative to each other. Various suitable ways in which the teachings herein may be combined will be readily apparent to those of ordinary skill in the art in view of the teachings herein. Such modifications and variations are intended to be included within the scope of the claims.

Having shown and described various versions of the present invention, further adaptations of the methods and systems described herein may be accomplished by appropriate modifications by one of ordinary skill in the art without departing from the scope of the present invention which is defined by the claims. Several of such potential modifications have been mentioned, and others will be apparent to those skilled in the art. For instance, the examples, versions, geometrics, materials, dimensions, ratios, steps, and the like discussed above are illustrative and are not required. Accordingly, the scope of the present invention should be considered in terms of the following claims and is understood not to be limited to the details of structure and operation shown and described in the specification and drawings.

## Claims

1. A valve (1) comprising:
a housing (13) including a cylindrical internal chamber (37); and
a valve assembly (10) comprising:
a plug (123) extending along a central axis and including a plug body (127) having an external plug surface (129), wherein the external plug surface (129) tapers radially outwardly in a first direction along the central axis;
a sleeve (101) having an external sleeve surface (105) and an internal sleeve surface (109) defining an interior cavity (111), wherein the internal sleeve surface (109) tapers radially outwardly in the first direction;
wherein the plug body (127) is positioned within the interior cavity (111) of the sleeve (101), the plug is rotatable about the central axis relative to the sleeve (101), and the plug (123) is translatable along the central axis relative to the sleeve (101);
wherein the sleeve (101) is positioned within the cylindrical internal chamber (37) of the housing (13) and fixed against movement relative thereto,
**characterized in that** the valve assembly further comprises a cartridge (61) having a generally rectangular mounting plate (63) configured to be removably coupled to a top (15) of the housing (13), a generally cylindrical central upper hub (65) extending upwardly from the mounting plate (63) and a generally tubular central lower hub (67) extending downwardly from the mounting plate (63) and configured to be received within the cylindrical internal chamber (37) of the housing (13) when the mounting plate (63) is fixedly coupled to the top (15);
wherein:
the lower hub (67) includes a support frame (81) having a generally cylindrical external surface (83) and a generally frustoconical internal surface (85) tapering radially outwardly in the first direction,
the sleeve (101) is fixedly coupled to the lower hub (67) of the cartridge (61):
the sleeve (101) includes an inner sleeve portion (107) at least partially spaced apart from an outer sleeve portion (103) by channels (119) configured to receive portions of the support frame (81);
the support frame (81) includes a pair of opposed lower hub apertures (87),
the sleeve (101) includes a pair of opposed sleeve apertures (113) extending from the external sleeve surface (105) to the internal sleeve surface (109) in alignment with the pair of opposed lower hub apertures (87);
the support frame (81) defines a plurality of curved slots (93, 99) extending from an external lower hub surface (83) to an internal lower hub surface (85) and disposed partially about peripheries of the respective lower hub apertures (87); and
respective portions of the support frame (81) are secured within the channels (119) and the outer and inner sleeve portions (103, 107) are coupled to each other by connecting portions configured to occupy respective curved slots of the plurality of curved slots (93, 99).

2. The valve (1) of claim 1, wherein the plug (123) further includes an input shaft (125) extending from the plug (123) in a second direction along the central axis.

3. The valve (1) of claim 2, wherein the plug (123) is configured to rotate about the central axis relative to the sleeve (101) in response to application of an input torque to the input shaft (125).

4. The valve (1) of claim 2, wherein the valve assembly (10) further comprises a nut having a fixed position along the central axis relative to the sleeve (101), wherein the nut (137) threadably engages the input shaft (125), wherein the plug (123) is configured to translate along the central axis relative to the sleeve (101) in response to rotation of the nut (137) relative to the input shaft (125).

5. The valve (1) of claim 1, wherein the external plug surface (129) is configured to sealingly engage the internal sleeve surface (109) when the plug (123) is at a first position along the central axis relative to the sleeve (101), wherein the external plug surface (129) is configured to disengage the internal sleeve surface (109) when the plug (123) is at a second position along the central axis relative to the sleeve (101).

6. The valve (1) of claim 1, wherein the external plug surface (129) tapers radially outwardly in the first direction along the central axis at a first angle, wherein the internal sleeve surface (109) tapers radially outwardly in the first direction at the first angle.

7. The valve (1) of claim 1, wherein the plug (123) includes a plug flow passage (133) extending through the plug body (127).

8. The valve (1) of claim 7, wherein the plug flow passage (133) is configured to selectively align with the pair of opposed sleeve apertures (113).

9. The valve (1) of claim 7, wherein the plug flow passage (133) is transverse to the central axis.

10. A method comprising:
(a) providing a valve (1) according to any of the previous claims;
and
(b) translating the plug (123) along the central axis from a first location to a second location relative to the sleeve (101).

11. The method of claim 10, wherein the act of translating the plug (123) includes sealingly engaging the external plug surface (129) with the internal sleeve surface (109).

12. The method of claim 10, wherein the act of providing the valve (1) includes inserting the sleeve (101) into the cylindrical internal chamber (37) of the housing (13) in a first direction along the central axis, wherein the act of translating the plug (123) includes translating the plug (123) along the central axis in a second direction.

13. The method of claim 12, wherein the second direction is opposite from the first direction.

14. The method of claim 12, wherein the act of inserting the sleeve (101) includes applying a compressive force to the external sleeve surface (105) of the sleeve (101).

## Patentansprüche

1. Ventil (1), das umfasst:
ein Gehäuse (13), das eine zylindrische inneren Kammer (37) beinhaltet; und
eine Ventilbaugruppe (10), die umfasst:
einen Kegel (123), der sich entlang einer Mittelachse erstreckt und einen Kegelkörper (127) beinhaltet, der eine äußere Kegeloberfläche (129) aufweist, wobei sich die äußere Kegeloberfläche (129) in einer ersten Richtung entlang der Mittelachse radial nach außen verjüngt;
eine Hülse (101) mit einer äußeren Hülsenoberfläche (105) und einer inneren Hülsenoberfläche (109), die einen Innenhohlraum (111) definieren, wobei sich die innere Hülsenoberfläche (109) radial in der ersten Richtung nach außen verjüngt;
wobei der Kegelkörper (127) innerhalb des Innenhohlraums (111) der Hülse (101) positioniert ist, der Kegel relativ zu der Hülse (101) um die Mittelachse drehbar ist und der Kegel (123) relativ zu der Hülse (101) entlang der Mittelachse verschiebbar ist;
wobei die Hülse (101) innerhalb der zylindrischen inneren Kammer (37) des Gehäuses (13) positioniert ist und gegen eine Bewegung relativ dazu fixiert ist,
**dadurch gekennzeichnet, dass** die Ventilbaugruppe ferner umfasst:
einen Einsatz (61) mit einer im Allgemeinen rechteckigen Montageplatte (63), die dazu konfiguriert ist, abnehmbar mit einer Oberseite (15) des Gehäuses (13) gekoppelt zu werden,
eine im Allgemeinen zylindrisch obere Mittelnabe (65), die sich von der Montageplatte (63) nach oben erstreckt, und eine im Allgemeinen röhrenförmige untere Mittelnabe (67), die sich von der Montageplatte (63) nach unten erstreckt und dazu konfiguriert ist, in der zylindrischen inneren Kammer (37) des Gehäuses (13) aufgenommen zu werden, wenn die Montageplatte (63) fixiert mit der Oberseite (15) gekoppelt ist;
wobei:
die untere Nabe (67) einen Stützrahmen (81) beinhaltet, der eine im Allgemeinen zylindrische äußere Oberfläche (83) und eine im Allgemeinen kegelstumpfförmige innere Oberfläche (85) beinhaltet, die sich in der ersten Richtung radial nach außen verjüngt,
die Hülse (101) fixiert mit der unteren Nabe (67) des Einsatzes (61) gekoppelt ist;
die Hülse (101) einen inneren Hülsenabschnitt (107) beinhaltet, der wenigstens teilweise durch Kanäle (119) von einem äußeren Hülsenabschnitt (103) beabstandet ist, wobei die Kanäle (119) dazu konfiguriert sind, Abschnitte des Stützrahmens (81) aufzunehmen;
der Stützrahmen (81) ein Paar gegenüberliegender unterer Nabenöffnungen (87) beinhaltet,
die Hülse (101) ein Paar gegenüberliegender Hülsenöffnungen (113) beinhaltet, die sich von der äußeren Hülsenoberfläche (105) zu der inneren Hülsenoberfläche (109) in Ausrichtung an dem Paar gegenüberliegender unterer Nabenöffnungen (87) erstrecken;
der Stützrahmen (81) eine Mehrzahl von gekrümmten Schlitzen (93, 99) definiert, die sich von einer äußeren unteren Nabenoberfläche (83) zu einer inneren unteren Nabenoberfläche (85) erstrecken und teilweise um die Umfänge der jeweiligen unteren Nabenöffnungen (87) herum angeordnet sind; und
die jeweiligen Abschnitte des Stützrahmens (81) in den Kanälen (119) befestigt sind und der äußere und der innere Hülsenabschnitt (103, 107) durch Verbindungsabschnitte miteinander gekoppelt sind, die dazu konfiguriert sind, die jeweiligen gekrümmten Schlitze der Mehrzahl von gekrümmten Schlitzen (93, 99) einzunehmen.

2. Ventil (1) nach Anspruch 1, wobei der Kegel (123) ferner eine Eingangswelle (125) beinhaltet, die sich von dem Kegel (123) in einer zweiten Richtung entlang der Mittelachse erstreckt.

3. Ventil (1) nach Anspruch 2, wobei der Kegel (123) dazu konfiguriert ist, sich um die Mittelachse relativ zu der Hülse (101) als Reaktion auf das Anwenden eines Eingangsdrehmoments auf die Eingangswelle (125) zu drehen.

4. Ventil (1) nach Anspruch 2, wobei die Ventilbaugruppe (10) ferner eine Mutter umfasst, die eine fixierte Position entlang der Mittelachse relativ zu der Hülse (101) aufweist, wobei die Mutter (137) mit der Eingangswelle (125) in Gewindeeingriff steht, wobei der Kegel (123) dazu konfiguriert ist, sich entlang der Mittelachse relativ zu der Hülse (101) als Reaktion auf eine Drehung der Mutter (137) relativ zu der Eingangswelle (125) zu verschieben.

5. Ventil (1) nach Anspruch 1, wobei die äußere Kegeloberfläche (129) dazu konfiguriert ist, dichtend in die innere Hülsenoberfläche (109) einzugreifen, wenn der Kegel (123) in einer ersten Position entlang der Mittelachse relativ zu der Hülse (101) ist, wobei die äußere Kegeloberfläche (129) dazu konfiguriert ist, sich von der inneren Hülsenoberfläche (109) zu lösen, wenn der Kegel (123) in einer zweiten Position entlang der Mittelachse relativ zu der Hülse (101) ist.

6. Ventil (1) nach Anspruch 1, wobei sich die äußere Kegeloberfläche (129) radial nach außen in der ersten Richtung entlang der Mittelachse in einem ersten Winkel verjüngt, wobei sich die innere Hülsenoberfläche (109) radial nach außen in der ersten Richtung in dem ersten Winkel verjüngt.

7. Ventil (1) nach Anspruch 1, wobei der Kegel (123) einen Kegeldurchflusskanal (133) beinhaltet, der sich durch den Kegelkörper (127) erstreckt.

8. Ventil (1) nach Anspruch 7, wobei der Kegeldurchflusskanal (133) dazu konfiguriert ist, sich selektiv an dem Paar gegenüberliegender Hülsenöffnungen (113) auszurichten.

9. Ventil (1) nach Anspruch 7, wobei der Kegeldurchflusskanal (133) quer zu der Mittelachse verläuft.

10. Verfahren, umfassend:
(a) Bereitstellen eines Ventils (1) nach einem der vorstehenden Ansprüche; und
(b) Verschieben des Kegels (123) entlang der Mittelachse von einer ersten Position zu einer zweiten Position relativ zu der Hülse (101).

11. Verfahren nach Anspruch 10, wobei der Schritt des Verschiebens des Kegels (123) das abdichtende Eingreifen der äußeren Kegeloberfläche (129) in die innere Hülsenoberfläche (109) beinhaltet.

12. Verfahren nach Anspruch 10, wobei der Schritt des Bereitstellens des Ventils (1) das Einführen der Hülse (101) in die zylindrische innere Kammer (37) des Gehäuses (13) in einer ersten Richtung entlang der Mittelachse beinhaltet, wobei die Aktion des Verschiebens des Kegels (123) das Verschieben des Kegels (123) entlang der Mittelachse in einer zweiten Richtung beinhaltet.

13. Verfahren nach Anspruch 12, wobei die zweite Richtung der ersten Richtung entgegengesetzt ist.

14. Verfahren nach Anspruch 12, wobei die Aktion des Einführens der Hülse (101) das Anwenden einer Druckkraft auf die äußere Hülsenoberfläche (105) der Hülse (101) beinhaltet.

## Revendications

1. Soupape (1) comprenant :
un boîtier (13) comportant une chambre interne (37) cylindrique ; et
un ensemble soupape (10) comprenant :
un obturateur (123) s'étendant le long d'un axe central et comportant un corps d'obturateur (127) ayant une surface d'obturateur externe (129), dans laquelle la surface d'obturateur externe (129) s'effile radialement vers l'extérieur dans une première direction le long de l'axe central ;
un manchon (101) ayant une surface de manchon externe (105) et une surface de manchon interne (109) définissant une cavité intérieure (111), dans laquelle la surface de manchon interne (109) s'effile radialement vers l'extérieur dans la première direction ;
dans laquelle le corps d'obturateur (127) est positionné au sein de la cavité intérieure (111) du manchon (101), l'obturateur est capable d'une rotation autour de l'axe central par rapport au manchon (101), et l'obturateur (123) est capable d'une translation le long de l'axe central par rapport au manchon (101) ;
dans laquelle le manchon (101) est positionné au sein de la chambre interne (37) cylindrique du boîtier (13) et fixé contre un déplacement par rapport à celle-ci,
**caractérisée en ce que** l'ensemble soupape comprend en outre une cartouche (61) ayant un plaque de montage (63) généralement rectangulaire configurée pour être accouplée amovible à un sommet (15) du boîtier (13),
un moyeu supérieur (65) central généralement cylindrique s'étendant vers le haut à partir de la plaque de montage (63) et un moyeu inférieur (67) central généralement tubulaire s'étendant vers le bas à partir de la plaque de montage (63) et configuré pour être reçu au sein de la chambre interne (37) cylindrique du boîtier (13) lorsque la plaque de montage (63) est accouplée fixe au sommet (15) ;
dans laquelle :
le moyeu inférieur (67) comporte un cadre de support (81) ayant une surface externe (83) généralement cylindrique et une surface interne (85) généralement tronconique s'effilant radialement vers l'extérieur dans la première direction,
le manchon (101) est accouplé fixe au moyeu inférieur (67) de la cartouche (61) ;
le manchon (101) comporte une portion de manchon intérieure (107) au moins partiellement espacée d'une portion de manchon extérieure (103) par des canaux (119) configurés pour recevoir des portions du cadre de support (81) ;
le cadre de support (81) comporte une paire d'ouvertures de moyeu inférieur (87) opposées,
le manchon (101) comporte une paire d'ouvertures de manchon (113) opposées s'étendant de la surface de manchon externe (105) à la surface de manchon interne (109) en alignement avec la paire d'ouvertures de moyeu inférieur (87) opposées ;
le cadre de support (81) définit une pluralité de fentes courbées (93, 99) s'étendant d'une surface de moyeu inférieur externe (83) à une surface de moyeu inférieur interne (85) et disposées partiellement autour de périphéries des ouvertures de moyeu inférieur (87) respectives ; et
des portions respectives du cadre de support (81) sont arrimées au sein des canaux (119) et les portions de manchon extérieure et intérieure (103, 107) sont accouplées l'une à l'autre par des portions de raccordement configurées pour occuper des fentes courbées respectives de la pluralité de fentes courbées (93, 99).

2. Soupape (1) selon la revendication 1, dans laquelle l'obturateur (123) comporte en outre un arbre d'entrée (125) s'étendant à partir de l'obturateur (123) dans une deuxième direction le long de l'axe central.

3. Soupape (1) selon la revendication 2, dans laquelle l'obturateur (123) est configuré pour une rotation autour de l'axe central par rapport au manchon (101) en réponse à l'application d'un couple d'entrée à l'arbre d'entrée (125).

4. Soupape (1) selon la revendication 2, dans laquelle l'ensemble soupape (10) comprend en outre un écrou ayant une position fixe le long de l'axe central par rapport au manchon (101), dans laquelle l'écrou (137) met en prise par filetage l'arbre d'entrée (125), dans laquelle l'obturateur (123) est configuré pour effectuer une translation le long de l'axe central par rapport au manchon (101) en réponse à une rotation de l'écrou (137) par rapport à l'arbre d'entrée (125).

5. Soupape (1) selon la revendication 1, dans laquelle la surface d'obturateur externe (129) est configurée pour mettre en prise étanche la surface de manchon interne (109) lorsque l'obturateur (123) est à une première position le long de l'axe central par rapport au manchon (101), dans laquelle la surface d'obturateur externe (129) est configurée pour sortir de prise avec la surface de manchon interne (109) lorsque l'obturateur (123) est à une deuxième position le long de l'axe central par rapport au manchon (101).

6. Soupape (1) selon la revendication 1, dans laquelle la surface d'obturateur externe (129) s'effile radialement vers l'extérieur dans la première direction le long de l'axe central selon un premier angle, dans laquelle la surface de manchon interne (109) s'effile radialement vers l'extérieur dans la première direction selon le premier angle.

7. Soupape (1) selon la revendication 1, dans laquelle l'obturateur (123) comporte un passage d'écoulement d'obturateur (133) s'étendant à travers le corps d'obturateur (127).

8. Soupape (1) selon la revendication 7, dans laquelle le passage d'écoulement d'obturateur (133) est configuré pour s'aligner sélectivement avec la paire d'ouvertures de manchon (113) opposées.

9. Soupape (1) selon la revendication 7, dans laquelle le passage d'écoulement d'obturateur (133) est transversal à l'axe central.

10. Procédé comprenant :
(a) la fourniture d'une soupape (1) selon l'une quelconque des revendications précédentes ;
et
(b) la translation de l'obturateur (123) le long de l'axe central d'un premier emplacement à un deuxième emplacement par rapport au manchon (101).

11. Procédé selon la revendication 10, dans lequel l'acte de translation de l'obturateur (123) comporte la mise en prise étanche de la surface d'obturateur externe (129) avec la surface de manchon interne (109).

12. Procédé selon la revendication 10, dans lequel l'acte de fourniture de la soupape (1) comporte l'insertion du manchon (101) dans la chambre interne (37) cylindrique du boîtier (13) dans une première direction le long de l'axe central, dans lequel l'acte de translation de l'obturateur (123) comporte la translation de l'obturateur (123) le long de l'axe central dans une deuxième direction.

13. Procédé selon la revendication 12, dans lequel la deuxième direction est opposée à la première direction.

14. Procédé selon la revendication 12, dans lequel l'acte d'insertion du manchon (101) comporte l'application d'une force de compression à la surface de manchon externe (105) du manchon (101).
